(19)

Europäisches
Patentamt
European
Patent Office
Office européen
des brevets

(11) **EP 1 562 728 B1**

(12) **EUROPEAN PATENT SPECIFICATION**

(45) Date of publication and mention
of the grant of the patent:
**11.06.2008 Bulletin 2008/24**

(51) Int Cl.:
**B29B 11/08** *(2006.01)*     **B29C 49/06** *(2006.01)*
**B29C 49/00** *(2006.01)*

(21) Application number: **03781626.1**

(22) Date of filing: **31.10.2003**

(86) International application number:
**PCT/US2003/034714**

(87) International publication number:
**WO 2004/041496 (21.05.2004 Gazette 2004/21)**

(54) **PET COPOLYMER COMPOSITION WITH ENHANCED MECHANICAL PROPERTIES AND STRETCH RATIO, ARTICLES MADE THEREWITH AND METHODS**

ZUSAMMENSETZUNG AUS POLYETHYLENETEREPHTHALATCOPOLYMEREN MIT VERBESSERTEN MECHANISCHEN EIGENSCHAFTEN UND STRECKVERHÄLTNIS, DARAUS HERGESTELLTE ARTIKEL UND VERFAHREN

COMPOSITION DE COPOLYMERE PET POSSEDANT DE MEILLEURES PROPRIETES MECANIQUES ET UN MEILLEUR RAPPORT D'ETIREMENT, ARTICLES FABRIQUES A PARTIR DE CETTE COMPOSITION ET PROCEDES ASSOCIES

(84) Designated Contracting States:
**AT BE BG CH CY CZ DE DK EE ES FI FR GB GR HU IE IT LI LU MC NL PT RO SE SI SK TR**

(30) Priority: **01.11.2002 US 423221 P**

(43) Date of publication of application:
**17.08.2005 Bulletin 2005/33**

(73) Proprietor: **The Coca-Cola Company Atlanta, GA 30313 (US)**

(72) Inventors:
- **SHI, Yu Branchburg New Jersey 08876 (US)**
- **RULE, Mark Atlanta, GA 30341 (US)**
- **KJORLAUG Christopher C deceased (US)**
- **The other inventors have agreed to waive their entitlement to designation.**

(74) Representative: **Towler, Philip Dean et al Frank B. Dehn & Co. St Bride's House 10 Salisbury Square London EC4Y 8JD (GB)**

(56) References cited:
| | |
|---|---|
| **EP-A1- 1 433 817** | **EP-A2- 1 336 472** |
| **WO-A-01/83193** | **US-A- 5 281 387** |
| **US-A- 5 409 983** | **US-A- 5 582 788** |
| **US-A- 5 641 548** | **US-A- 5 656 719** |
| **US-A- 5 925 710** | **US-A- 5 939 516** |
| **US-A- 6 019 933** | **US-A1- 2002 128 427** |

- **DATABASE WPI Section Ch, Week 198003 Derwent Publications Ltd., London, GB; Class A23, AN 1980-04435C XP002273224 & JP 54 154468 A (TOYOBO KK), 5 December 1979 (1979-12-05)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

This invention relates to preforms and their containers made with poly(ethylene terephthalate)-based resin compositions that possess low levels diol and acid modification, such as naphthalenedicarboxylic acid and diethylene glycol. More particularly, this invention relates to low stretch ratio preforms and their containers, which exhibit enhanced mechanical properties relative to containers made using conventional poly(ethylene terephthalate)-based resin compositions.

Background of the Invention

Poly(ethylene terephthalate)-based resins, which are commonly referred to in the industry simply as "PET" even though they may and often do contain minor amounts of additional components, have widely been used to make containers for carbonated soft drink, juice, water and the like due to their excellent combination of mechanical and gas barrier properties. As the use of plastics such as PET for packaging increases, concerns regarding the environmental impact of plastic waste are becoming more and more significant. Source reduction is a preferred strategy for reducing the environmental impact of plastic containers. Source reduction saves resources and energy; however, with PET additional source reduction is difficult to achieve, because of the physical performance requirements necessary for the major applications for this polymer.

One source reduction opportunity that does exist is related to the degree of material utilization achieved in blow-molding of PET preforms into PET containers. The degree of material utilization is defined as the amount of unoriented polymer present in the sidewall of the container. For large sized containers, the amount of material utilization is already high, and further increases offer limited opportunity for source reduction. However, for small sized containers, the amount of material utilization is significantly lower, with degrees of material utilization typically ranging from 80 to 85 percent. Improving material utilization using conventional PET can be achieved by increasing the stretch ratio of the preform. Increasing the stretch ratio of the preform provides an added benefit by increasing the mechanical properties of the container, because the stiffness of PET is directly affected by the degree of orientation imposed by stretching the polymer. However, there is a significant cost associated with increasing the preform stretch ratio. Increasing the preform stretch ratio necessarily means increasing the wall thickness of the preform, which adversely impacts injection molding and blow molding cycle times. This consequently consumes more energy and increases the capital and operating cost for making PET containers.

Previous methods of source reduction have focused simply on reducing the weight of the container, with a concomitant reduction in the sidewall thickness of the resulting container. This approach inherently sacrifices the mechanical integrity of the container, since sidewall rigidity relates to the second power of the thickness. Although in principle the sidewall rigidity of a container could be maintained by increasing the modulus of the polymer, in practice this is difficult to achieve. In addition, sidewall rigidity varies only to the first power of modulus; therefore, a much higher increase in the modulus would be required to counter-balance any thickness reduction. While an increase in the molecular weight of the PET or crystallinity level of the containers can increase the modulus of PET, these approaches have inherent limits. An even minor increase in molecular weight also increases the melt viscosity of the PET, which can lead to significantly greater polymer degradation during the melt processing that produces the preforms. To increase the crystallinity level of the container substantially, additional steps in the container manufacturing process, such as heat-setting at high temperature, are required. Other means to achieve much higher crystallinity of containers, such as through nucleation agents or hyper-stretching, have not been successful.

U.S. Patents 5,631,054 and 5,162,091 described methods to increase the mechanical properties of PET through use of specific low molecular weight additives. Those additives provided modest improvements to the tensile modulus of PET. However, the amount of additives required is high (1-5°/ by weight), and the additives claimed are relatively expensive compared to the cost of PET. In addition, because these additives were not part of the polymer chains, they are potentially , extractable, which is detrimental to their use in food contact applications.

EP 1 336 472 discloses a coinjection stretch blow molded container that comprises a layer of thermoplastic polyester and a layer of ethylene-vinyl alcohol copolymer resin.

EP 1 433 817 discloses polyester compositions and processes for producing biaxially stretched polyester bottles.

Thus, there exists a need in the art for a container that has a high degree of material utilization, is lighter weight, has sufficient mechanical properties, and consumes less energy in its production. Accordingly, it is to the provision of such that the present invention is directed.

Summary of the Invention

This invention addresses the above-described need for lighter weight containers by providing an injection molded preform having an open ended mouth forming portion, an intermediate body forming portion, and a closed base-forming portion. In one embodiment, the preform comprises a polyethylene terephthalate) copolymer (hereinafter "PET Copolymer") comprising a diol component having repeat units from ethylene glycol and a non-ethylene glycol diol component and a diacid component having repeat units from terephthalic acid and a non-terephthalic acid diacid component. The total amount of non-ethylene glycol diol component and non-terephthalic acid diacid component is present in the PET Copolymer in an amount from about 0:2 mole percent to less than about 2.2 mole percent. The repeat units from the non-terephthalic acid diacid component present in the PET copolymer is in an amount fi-om about 0.1 mole percent to less than about 1.0 mole percent, and the repeat units from the non-ethylene glycol diol component are present in the PET copolymer in an amount from about 0.1 to about 2.0 mole percent. The mole percentages are based on 100 mole percent diacid component and 100 mole percent diol component. This definition is applicable to mole percentages throughout this specification. The preform, the container and corresponding methods of making each are additional embodiments of this invention.

In another embodiment, a preform for use in making a container comprises a PET Copolymer comprising a diol component having repeat units from ethylene glycol and a non-ethylene glycol diol component and a diacid component having repeat units from terephthalic acid and a non-terephthalic acid diacid component. The total amount of non-ethylene glycol diol component and non-terephthalic acid diacid component is present in the PET Copolymer in an amount from about 0.2 mole percent to less than about 3.0 mole percent based on 100 mole percent of the diol component and 100 mole percent of the diacid component. Furthermore, the non-ethylene glycol diol component is present in an amount of from about 0.1 to about 2.0 and the non-terephthalic acid diacid component is present in an about of about 0.1 to about 1.0.

In preferred embodiments, the preforms are designed to have a stretch ratio in the range from about 8 to about 12, enabling the preforms to have a reduced wall thickness. Thus the cycle time for manufacture of the preforms is reduced. Because the material utilization is higher, less material needs to be used and the cost of goods is lowered, while the containers produced exhibit improved thermal stability and sidewall rigidity characteristics.

In still another embodiment of the present invention, a method for reducing the cycle time for making a container comprises the steps of

(1) providing a PET Copolymer melt comprising a diol component having repeat units from ethylene glycol and a non-ethylene glycol diol component and a diacid component having repeat units from terephthalic acid and a non-terephthalic acid diacid component, wherein the total amount of non-ethylene glycol diol component and non-terephthalic acid diacid component is present in the PET Copolymer in an amount from about 0.2 mole percent to less than about 2.2 mole percent, the repeat units from the non-tercphthalic acid diacid component present in the PET copolymer is in an amount from about 0.1 mole percent to less than about 1.0 mole percent, and the repeat units from the non-ethylene glycol diol component are present in the PET copolymer in an amount from about 0.1 to about 2.0 mole percent,
(2) then injecting the PET Copolymer into a mold,
(3) then cooling the mold and the contained polymer,
(4) then releasing from the mold a preform,
(5) then reheating the preform, and
(6) then blow molding the preform into a container.

The cycle time for making the container is reduced as compared to a second cycle time for making a second container comprising a poly(ethylene terephthalate) resin having comonomer modification greater than about 2.2 mole percent of a combination of a non-ethylene glycol diol component and a non-terephthalic acid diacid component.

Thus, embodiments of this invention provide two sets of improvements. In one set, the PET Copolymer is used with a conventional preform design to produce a container with enhanced mechanical properties, higher crystallinity and improved shelf life. In the other set, the PET Copolymer is used with a redesigned preform that has a stretch ratio of from about 8 to about 12, a reduced preform wall thickness, and reduced cycle time to produce a container of similar or improved quality compared to a container produced using conventional PET resin and a conventional preform design.

Brief Description of Drawings

Fig. 1 is a sectional elevation view of an injection molded preform having a conventional configuration, made with the PET Copolymer in accordance with a preferred embodiment of this invention.

Fig. 2 is a sectional elevation view of an injection molded preform having an unconventional configuration in accordance with a preferred embodiment of this invention.

Fig. 3 is a sectional elevation view of a blow molded container made from the preform of Fig. 1 in accordance with a preferred embodiment of this invention.

Detailed Description of the Invention

In the present invention, a PET Copolymer is made into an injection molded preform which is then blow molded into a container. The preform comprises an open ended mouth forming portion, an intermediate body forming portion, and a closed base forming portion. The preform comprises a PET Copolymer comprising a diol component having repeat units from ethylene glycol and a non-ethylena glycol diol component and a diacid component having repeat units from terephthalic acid and a non-terephthalic acid diacid component, wherein the total amount of non-ethylene glycol diol component and non-terephthalic acid diacid component is present in the PET Copolymer in an amount from about 0.2 mole percent to less than about 2.2 mole percent. The mole percentages of diol components and diacid components include all residual comonomers in the PET Copolymer composition such as those formed during or passing through the manufacturing process of the PET Copolymer. In all instances throughout the specification, the PET Copolymer is based on a total of 200 mole percent including 100 mole percent of the diol component and 100 mole percent of the diacid component.

The amount of each of the non-ethylene glycol diol component and non-terephthalic acid diacid component in the PET Copolymer can vary to some extent within the total amount of both, which is from about 0.2 mole percent to less than about 2.2 mole percent. Preferably, the total amount of non-ethylene glycol diol component and non-terephthalic acid diacid component is present in the PET Copolymer in an amount from about 1.1 mole percent to about 2.1 mole percent, and even more preferably in an amount from about 1.2 mole percent to about 1.6 mole percent Repeat units from the non-terephthalic acid diacid component are present in the PET Copolymer in an amount from about 0.1 to about 1.0 mole percent, preferably in an amount from about 0.2 to about 0.75 mole percent, more preferably in an amount from about 0.25 to about 0.6 mole percent, and still more preferably in an amount from about 0.25 to less than about 0.5 mole percent. The repeat units from the non-ethylene glycol diol component are present in the PET Copolymer in an amount from about 0.1 to about 2.0 mole percent, preferably in an amount from about 0.5 to about 1.6 mole percent, and more preferably in an amount from about 0.8 to about 1.3 mole percent. The PET Copolymer preferably has an intrinsic viscosity (IV), measured according to ASTM D4603-96, from about 0.6 to about 1.1 dL/g, more preferably from about 0.7 to about 0.9, and even more preferably from about 0.8 to about 0.84. Desirably, the PET resin of this invention is a reaction grade resin, meaning that the PET resin is a direct product of a chemical reaction between comonomers and not a polymer blend.

In another embodiment of the invention, a preform for use in making a container comprises a PET Copolymer comprising a diol component having repeat units from ethylene glycol and a non-ethylene glycol diol component and a diacid component having repeat units from terephthalic acid and a non-terephthalic acid diacid component. The total amount of non-ethylene glycol diol component and iwn-terephtbalic acid diacid component present in the PET Copolymer is in an amount from about 0.2 mole percent to less than about 3.0 mole percent based on 100 mole percent of the diol component and 100 mole percent of the diacid component. The non-ethylene glycol diol component is present in an amount of from about 0.1 to about 2.0 and the non-tetephthalic acid diacid component is present in an about of about 0.1 to about 1.0. Preferably, the total amount of non-ethylene glycol diol component and non-terephthalic acid diacid component is present in an amount from about 0.2 mole percent to less than about 2.6 mole percent.

The non-terephthalic acid diacid component can be any of a number of diacids, including adipic acid, succinic acid, isophthalic acid (IPA), phthalic acid, 4,4'-biphenyl dicarboxylic acid, naphthalenedicarboxylic acid, and the like. The preferred non-terephthalate acid diacid component is 2,6-naphthalenedicarboxylic acid (NDC). The non-ethylene glycol diols contemplated in this invention include cyclohexanedimethanol, propanediol, butanediol, and diethylene glycol. Of these, diethylene glycol (DEG) is preferred since it is already naturally present in the PET Copolymer. The non-terephthalic acid diacid component and the non-ethylene glycol diol component may also be mixtures of diacids and diols, respectively.

The levels of DEG in PET Copolymers of the present invention range from about 0.1 to about 2.0 mole percent, which is below the typical residual levels of DEG present in the manufacture of conventional PET (hereinafter "Conventional PET"). Conventional PET typically contains from about 2.4 to about 2.9 mole percent DEG, which is equivalent to more commonly referenced weight percent values of about 1.3 to about 1.6. Those skilled in the art of PET manufacture generally regard DEG as a harmless by-product of the polymer manufacture; consequently, little effort has been directed toward reduction of DEG levels in PET intended for use in containers. Thus, modifications to the PET production process for containers must occur to achieve the lower DEG levels in the PET Copolymer of the present invention. Any method suitable for reducing DEG content of polyester can be employed. Suitable methods include reducing the mole ratio of diacid or diester relative to ethylene glycol in the esterification or transesterification reaction; reducing the temperature of the esterification or transesterification reaction, addition of DEG-suppressing additives, including tetra-alkyl ammonium salts and the like; and reduction of the DEG content of the ethylene glycol that is recycled back to the esterification or transesterification reaction.

In desirable embodiments, the preforms have a stretch ratio in the range from about 8 to about 12 when used to make containers, and more desirably from about 8 to about 10. The stretch ratio as used herein refers to the nomenclature that is well known in the art and is defined as following:

$$\text{Stretch ratio} = (\text{maximum container diameter/internal preform diameter})$$
$$\text{x } [(\text{height of container below finish})/(\text{height of preform below finish})]$$

The natural stretch ratio is an inherent property of a polymer. The measurement of the free blow volume of a polymer relative to a preform, which is used in the Examples herein, provides a method to measure the natural stretch ratio of a polymer. The natural stretch ratio of a polymer influences the preform design by determining the stretch ratio limitations of a preform used in the blow molding process for making a container, A polymer with a lower natural stretch ratio allows a preform to be designed with a lower stretch ratio. Whenever the stretch ratio of a preform is lower, the sidewall thickness of the preform required to make a bottle of a target sidewall thickness can be reduced. An important factor in blow molding lightweight containers is also uniform wall thickness distribution, especially in the label panel area. Using polymers with lower natural stretch ratios inherently causes more material to be uniformly oriented and distributed during the blow molding process. With an understanding of the natural stretch ratio of a polymer, preform dimensions such as height, inside diameter, and wall thickness can be selected so that the preform can be blow molded into a container having certain selected physical properties such as weight, height, maximum diameter, thermal stability, and sidewall rigidity.

In another embodiment of the present invention, a method for reducing the cycle time for making a container comprises the steps of:

(1) providing a PET Copolymer melt comprising a diol component having repeat units from ethylene glycol and a non-ethylene glycol diol component and a diacid component having repeat units from terephthalic acid and a non-terephthalic acid diacid component, wherein the total amount of non-ethylene glycol diol component and non-terephthalic acid diacid component is present in the PET Copolymer in an amount from about 0.2 mole percent to less than about 2.2 mole percent, the repeat units from the non-terephthalic acid diacid component present in the PET copolymer is in an amount from about 0.1 mole percent to less than about 1.0 mole percent, and the repeat units from the non-ethylene glycol diol component are present in the PET copolymer in an amount from about 0.1 to about 2.0 mole percent,
(2) then injecting the PET Copolymer into a mold,
(3) then cooling the mold and the contained polymer,
(4) then releasing from the mold a preform,
(5) then reheating the preform, and
(6) then blow molding the preform into a container.

The cycle time for making the container according to the steps above is reduced as compared to a second cycle time for making a second container comprising a poly(ethylene terephthalate) resin having comonomer modification greater than about 2.2 mole percent of a combination of a non-ethylene glycol diol component and a non-terephthalic acid diacid component.

In another method embodiment, a method for making a container comprises blow molding an injection molded preform that has an open ended mouth forming portion, an intermediate body forming portion, and a closed base forming portion, The preform comprises a PET Copolymer comprising a diol component having repeat units from ethylene glycol and a non-ethylene glycol diol component and a diacid component having repeat units from terephthalic acid and a non-terephthalic acid diacid component. The total amount of non-ethylene glycol diol component and non-terephthalic acid diacid component present in the PET Copolymer is in an amount from about 0.2 mole percent to less than about 2.2 mole percent. The repeat units from the non-terephthalic acid diacid component present in the PET copolymer is in an amount from about 0.1 mole percent to less than about 1.0 mole percent, and the repeat units from the non-ethylene glycol diol component are present in the PET copolymer in an amount from about 0.1 to about 2.0 mole percent.

In still another method embodiment, a method for making a preform for use in making containers comprises injection molding a PET Copolymer, which comprises a diol component having repeat units from ethylene glycol and a non-ethylene glycol diol component and a diacid component having repeat units from terephthalic acid and a non-terephthalic acid diacid component. The total amount of non-ethylene glycol diol component and non-terephthalic acid diacid component present in the PET Copolymer is in an amount from about 0.2 mole percent to less than about 2.2 mole percent.

In the method embodiments, the PET Copolymer preferably comprises 2,6-naphthalenedicarboxylic acid as the non-terephthalic acid diacid component present in an amount from about 0.1 to about 1,0 mole percent and diethylene glycol as the non-ethylene glycol diol component present in the PET Copolymer in an amount from about 0.1 to about 2.0 mole percent, Preferably, the preform has a stretch ratio in the range from about 8 to about 12 and more preferably in the range from about 8 to about 10.

To understand the significance of the present invention, an understanding of the conventional process of making containers is needed. Firstly, PET pellets that are obtained from a conventional polyester esterification/polycondensation process are melted and subsequently formed into preforms through an injection molding process. Secondly, the preforms are heated in an oven to a temperature above the polymer's glass transition temperature, and then formed into containers via a blow molding process. The desired end result is clear containers with sufficient mechanical and barrier properties to provide appropriate protection for the contained beverage or food product.

An important consideration in producing clear or transparent containers is to first produce clear or transparent preforms. During the injection molding step thermally induced crystallization can occur in the conversion of the polymer to a preform. Thermally induced crystallization tends to form large crystallites in the polymer, with a concomitant formation of haze. In order to minimize the formation of crystallites and thus have clear preforms, the rate of thermal crystallization needs to be slow enough so that preforms with little or no crystallinity can be produced. However, if the rate of thermal crystallization is too low, the production rates of PET resin can be adversely affected, since PET must be thermally crystallized prior to solid-state polymerization, a process used to increase the molecular weight of PET and simultaneously remove unwanted acetaldehyde. Solid state polymerization increases the molecular weight of the polymer so that a container made from the polymer will have the requisite strength. Prior art techniques for reducing thermal crystallization rate include the use of PET containing a certain amount of comonomers. The most commonly used comonomer modifiers are isophthalic acid or 1,4-cyclohexanedimethanol, which are added at levels ranging from 1.5 to 3.0 mole%.

Counterbalancing the need to reduce the rate of thermal crystallization during injection molding is the need to increase the rate of strain-induced crystallinity that occurs during blow molding. Strain-induced crystallinity results from the rapid mechanical deformation of PET, and generates extremely small, transparent crystallites. The amount of crystallinity present in the container sidewall correlates with the strength and barrier performance of the container. Previously, it has been demonstrated that increasing the DEG content of PET from 2.9 to 4.0 mole percent causes an increase in crystallization rates of PET compared to Conventional PET containing between 2.4 to 2.9 mole percent DEG. The rationale for this phenomenon is that the increased polymer chain flexibility resulting from the higher DEG content allows for more rapid ordering and packing of the polymer chains into polymer crystals.

In the PET Copolymer of the present invention both a reduced rate of thermal crystallization and an increased rate of strain-induced crystallization is unexpectedly found to occur by the comonomer modification of non-terephthalic acid diacid component at about 0.1 to about 1.0 mole percent and of non-ethylene glycol diol component at about 0.1 to about 2.0 mole percent, respectively. The non-terephthalic acid diacid such as NDC is believed to reduce the thermal crystallization rate due to the rigidity of the NDC moiety hindering polymer chain flexibility, and thus makes formation of crystallites more difficult. The addition of NDC has also been discovered to enhance the stiffness of the PET chains and results in an unexpected increase in the sidewall rigidity of the containers made from PET Copolymer. Furthermore and contrary to expectations, reducing the DEG content to less than about 2.0 mole percent in the PET Copolymer results in an increase in the rate of strain-iriduced crystallization relative to Conventional PET containing between 2.4 and 2.9 mole percent DEG.

A consequence of this unique combination of low amounts of DEG and NDC, at least in preferred embodiments, is a reduction in the natural stretch ratio of PET Copolymer as compared to that of Conventional PET. The physical dimensions of the preform can therefore be altered so as to make a thinner walled preform that produces a lighter weight container that has an acceptable level of strength and similar container sidewall thickness compared to containers made from Conventional PET using conventional preform designs, or to make similar weight containers having a higher level of strength and greater container sidewall thickness. The physical properties of the preform can also be selected to reduce the preform injection molding cycle time and the container blow molding cycle time without compromising the container strength or shelf life of the container contents.

By using the PET Copolymer of the present invention, containers that have enhanced mechanical properties, higher crystallinity, thicker sidewalls, and improved shelf-life can be made utilizing preforms that have conventional stretch ratios of about 14. Alternatively and in preferred embodiments, unconventional preforms can be designed to have a longer length and thinner walls and that have a stretch ratio of from about 8 to about 12. Containers made using the PET Copolymer of the present invention and such unconventional preforms exhibit improved material utilization, stiffness, and higher levels of strain induced crystallinity during the blow molding process as compared to conventional preforms made from Conventional PET even when the preforms have reduced sidewall thickness and lower stretch ratios than that of conventional preforms made with Conventional PET.

The present invention can be more fully appreciated when comparing container properties relative to the preform stretch ratio. A preform designed to have a stretch ratio of about 14 and a sidewall thickness of about 3.2 mm using Conventional PET having DEG content above 2.0 mole percent will result in a blow molded container having a sidewall thickness of about 0.23 mm. When using the same preform design with the PET Copolymer of the present invention, the blow molded container will have a sidewall thickness of about 0.35 mm. To obtain the same resulting container sidewall thickness using the PET Copolymer, the preform needs to be redesigned to be longer and have a sidewall thickness of 2.3 mm. This thinner sidewall preform exhibits improved cycle times and reduced energy usage as well as a reduced total weight as compared with preforms made of Conventional PET resins, while at the same time producing an equivalent or improved container. To further illustrate, a preform made with Conventional PET using the redesigned preform having a sidewall thickness of 2.28 mm would result in a useless container because the sidewall thickness of the container would be only 0.16 mm, which would not provide enough structural integrity to the container, and would also exhibit reduced shelf-life for carbonated beverages.

Thus, an important benefit of the reduced natural stretch ratio of the PET Copolymer of the present invention is the redesign of preforms so that a longer-length, thinner-walled preform can be designed to achieve the same or better final PET container properties as obtained from Conventional PET and conventional preform designs. As well known to those skilled in the art, the sidewall thickness of the preform correlates with the injection molding cooling time. The cooling time is proportional to the square of the wall thickness. Since injection molding cycle time is to a large degree determined by cooling time, the preform design of the present invention will substantially reduce the injection molding cycle time. A thinner-walled preform is also easier to reheat since it will take less time for heat to transfer throughout the preform sidewall. This potentially can reduce the blow molding reheat and heat saturation time, resulting in an improvement in productivity and a reduction in energy usage in the blow molding process.

The light weighting potential for a container can be illustrated with two tests: thermal expansion and sidewall deflection as described in the following sections. Both tests demonstrate the mechanical properties of the bottles of thermal stability and sidewall rigidity, respectively. For the same resin composition, a lighter weight bottle has lower mechanical strength, poorer thermal stability (and concomitantly greater thermal expansion), and less sidewall rigidity (or greater sidewall deflection). The low DEG, low NDC PET Copolymer of the present invention displays enhanced performance in both thermal stability and sidewall rigidity tests. Such performance is possibly caused by the increased crystallinity of the PET Copolymer and the decreased moisture sorption therein. Both of these factors can substantially decrease creep, which is the dimensional change under stress of a container measured by the change in diameter and height. This is an important factor, because most containers undergo some stress during and after the filling process. Therefore, thermal expansion and sidewall deflection tests are used herein to compare the performance of containers, and especially the performance of pressurized containers.

In preferred embodiments, containers of this invention include bottles, drums, carafes, and coolers, and the like. As is well known to those skilled in the art, such containers can be made by blow molding an injection molded preform. Examples of suitable preform and container structures and methods for making the same are disclosed in U.S. Pat. No. 5,888,598, the disclosure of which is expressly incorporated herein by reference in its entirety. Other preform and container structures, not disclosed in U.S. Pat. No. 5,888,598, are described herein as well.

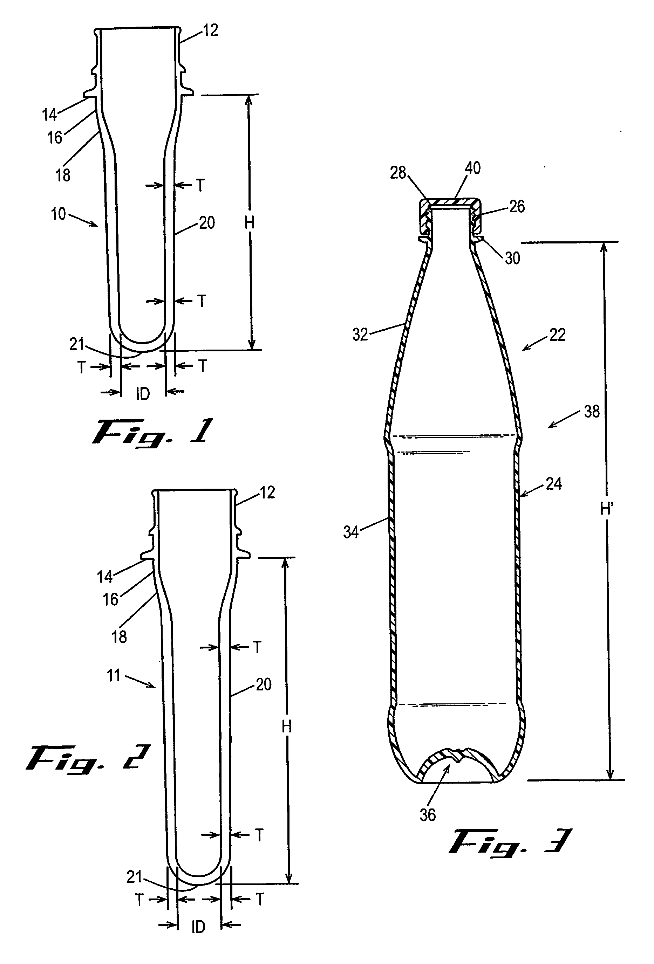

Turning to the Figs. 1-3, a polyester preform 10 having a conventional configuration is illustrated in Fig. 1 and a polyester preform 11 having a configuration in accordance with an embodiment of this invention is illustrated in Fig. 2. These preforms 10 and 11 in Figs. 1 and 2 each have the same components, and therefore, like reference numerals indicate like components throughout the Figs., but the dimensions of the preforms are different. The dimensions in Figs. 1 and 2 are not drawn to scale.

The preforms 10 and 11 are made by injection molding the PET Copolymer of this invention and comprise a threaded neck finish 12 which terminates at its lower end in a capping flange 14. Below the capping flange 14, there is a generally cylindrical section 16 which terminates in a section 18 of gradually decreasing external diameter so as to provide for an increasing wall thickness. Below the section 18 there is an elongated body section 20. The height of the preform is measured from the capping flange 14 to a closed end 21 of the elongated body section 20.

The preforms 10 and 11 illustrated in Figs. 1 and 2 can each be blow molded to form a container 22 illustrated in Fig. 3. The container 22 comprises a shell 24 comprising a threaded neck finish 26 defining a mouth 28, a capping flange 30 below the threaded neck finish, a tapered section 32 extending from the capping flange, a body section 34 extending below the tapered section, and a base 36 at the bottom of the container. The height of the container is measured from the capping flange 30 to a closed end at the base 36. The container 22 is suitably used to make a packaged beverage 38, as illustrated in Fig. 3. The packaged beverage 38 includes a beverage such as a carbonated soda beverage disposed in the container 22 and a closure 40 sealing the mouth 28 of the container.

According to preferred embodiments of this invention, the intermediate body forming portion of the preform has a wall thickness from 1.5 to 8 mm. Furthermore, according to preferred embodiments, the intermediate body forming portion of the preform has an inside diameter from 10 to 30 mm, and the height of the preform, which extends from the closed end of the preform opposite the finish to the finish, is from 50 to 150 mm. Preferably, containers made in accordance with preferred embodiments of this invention have a volume within the range from 0.25 to 3 liters and a wall thickness of 0.25 to 0.65 mm.

In this specification, reference is made to dimensions of the preforms 10 and 11 and the resulting containers 22. The height H of the preforms is the distance from the closed end 21 of the preform opposite the finish 12 to the capping flange 14 of the finish. The inside diameter ID of the preforms 10 and 11 is the distance between the interior walls of the elongated body section 20 of the preforms. The wall thickness T of the preforms 10 and 11 is measured at the elongated body section 20 of the preforms also. The height H' of the containers 22 is the distance from the closed end of the base 36 of the container opposite the finish 26 to the capping flange 30 of the finish. The maximum container diameter MD is the diameter of the container at its widest point along the height of the container 22. The hoop stretch ratio of the preforms equals the maximum container diameter divided by the internal preform diameter and the axial stretch ratio equals the height of container below the finish divided by the height of preform below the finish. The stretch ratio of the preforms equals the product of the hoop stretch ration and the axial stretch ratio.

The preforms 10 and .11, container 22, and packaged beverage 38 are but exemplary embodiments of the present invention. It should be understood that the PET Copolymers of the present invention can be used to make a variety of preforms and containers having a variety of configurations.

The present invention is described above and further illustrated below by way of examples, which are not to be construed in any way as imposing limitations upon the scope of the invention. On the contrary, it is to be clearly understood that resort may be had to various other embodiments, modifications, and equivalents thereof which, after reading the description herein, may suggest themselves to those skilled in the art without departing from the spirit of the present invention and/or scope of the appended claims.

Example 1

Different PET resins were injection molded with a lab-scale Arburg 75 unit cavity injection machine into conventional preform molds with a stretch ratio about 12.3 but with different gram weights. Resins were pre-dried to moisture levels below 30 parts per million (ppm). The preforms were then stretch blow molded with a SBO-1 stretch blow-molding machine into 500 ml Coca-Cola Contour bottles. A description of the weights and compositions of the samples is listed in Table 1. The #3 Samples are representative of embodiments of the present invention and the #1 and #2 Samples are comparative.

Table 1

| Sample | Gram weight | DEG mole % | NDC mole % | IPA mole% |
|--------|-------------|------------|------------|-----------|
| #1-27 | 27 | 2.89 | 0 | 3 |
| #2-27 | 27 | 1.45 | 0 | 2.5 |
| #3-27 | 27 | 1.45 | 0.5 | 0 |
| | | | | |
| #1-26 | 26 | 2.89 | 0 | 3 |
| #2-26 | 26 | 1.45 | 0 | 2.5 |
| #3-26 | 26 | 1.45 | 0.5 | 0 |
| | | | | |
| #1-24 | 24 | 2.89 | 0 | 3 |
| #2-24 | 24 | 1.45 | 0 | 2.5 |
| #3-24 | 24 | 1.45 | 0.5 | 0 |

Example 2

The containers produced in Example 1 were subjected to a standard thermal stability test, which involves filling the containers with carbonated water, holding them at 22 deg C for 24 hours, subjecting them to a temperature of 38 deg C for an additional 24 hours, and then measuring the dimensional changes that occurred relative to the unfilled containers. The data in Table 2 shows that low DEG, low NDC PET Copolymers of the #3 Samples from Example 1 have increased thermal stability property for pressurized containers over that of the comparable Samples #1 and #2, as evidenced by lower thermal expansion results. The 24 gram Sample #3 exhibits enhanced thermal stability compared to the 27 gram Sample #1 control.

Table 2

| Sample | Label Diameter Expansion (%) | Pinch Diameter Expansion (%) |
|---|---|---|
| #1-27 | 3.1 | 5.4 |
| #2-27 | 2.6 | 5.6 |
| #3-27 | 2.3 | 4.8 |
| | | |
| #1-26 | 3.2 | 5.4 |
| #2-26 | 3.9 | 7.5 |
| #3-26 | 2.7 | S.4 |
| | | |
| #1-24 | 3.6 | 5.8 |
| #2-24 | 2.4 | 4.9 |
| #3-24 | 2.6 | 4.7 |

Example 3

In Example 3, containers made in Example 1 were tested for sidewall rigidity using a sidewall deflection test. The sidewall deflection test is designed to measure the amount of force required to deflect the label panel of PET bottles 12 mm (0.47") with an 8 mm (0.32") round tip probe at a cross-head speed of 508 mm/min. This measurement gives information about the rigidity of the container. The greater the force required to achieve a specific sidewall deflection, the greater the rigidity of the bottle sidewall.

The data in Table 3 shows that the low DEG, low NDC PET Copolymers of the #3 Samples from Example 1 have increased sidewall rigidity over that of the comparable Samples #1 and #2. The sidewall rigidity of the 24 gram sample #3 is equivalent to 27 gram sample #1 control.

Table 3

| Sample | Sidewall Deflection (Kgf.) |
|---|---|
| #1-27 | 4.87 |
| #3-27 | 5.36 |
| #2-27 | 5.35 |
| | |
| #1-26 | 4.25 |
| #3-26 | 4.67 |
| #2-26 | 4.53 |
| | |
| #1-24 | 4.14 |
| #3-24 | 4.80 |
| #2-24 | 4.50 |

Example 4

The data in Table 4 shows that the crystallinity of containers prepared from low DEG, low NDC PET Copolymer samples using a conventional preform design are higher than that of containers prepared from Conventional PET using the same preform design. The PET containers having the compositions shown in Table 4 above were made in the same manner as the containers in Example l.

The PET Copolymer made from 1.09 mole percent DEG and 0.5 mole percent of NDC has a significantly higher crystallinity than that of the other formulas. The containers made from the PET Copolymers, however, are clear and haze-free, which indicates that in spite of the increased crystallinity of these resins, the rate of thermal crystallization is still sufficiently slow that minimal crystallization occurs under the injection molding conditions employed. The higher container sidewall crystallinity is believed to contribute to the improved thermal stability and the improved sidewall rigidity.

Table 4

| Composition | | | Strain Induced Crystallinity (%) |
|---|---|---|---|
| mole% IPA | mole% DEG | mole% NDC | |
| 3.0 | 2.72 | 0 | 25.8 |
| 3.0 | 1.09 | 0 | 22.4 |
| 3.0 | 2.00 | 0 | 22.3 |
| 0 | 1.09 | 0.5 | 28.8 |
| 0 | 1.09 | 0.5 | 29.9 |
| 0 | 1.09 | 1 | 26.4 |

Example 5

The free blow volumes of PET preforms &om Example 1 and PET preforms made in accordance with the procedure in Example 1 were determined by heating the preforms to 105 deg C, and then blowing balloons from the heated preforms with 862 kPag (125 psig) air pressure. The volume of the resulting balloons was measured by filling the balloons with water, and determining the volume of water contained in the balloons by weighing. The results of these measurements are shown in Tables 5 and 6. The free blow volume is directly correlates to the natural stretch ratio of the polymers. Under the same free blow conditions, the higher the free blow volume, the higher the natural stretch ratio of the polymer, These results show that the 1,45 mole percent DEG and the 0.5 mole percent IVDC containing PET Copolymer exhibits a 25 to 47 percent reduction in the free blow volume relative to the control. This is equivalent to an 18 to 30 percent reduction in the natural stretch ratio of the resin.

Table 5

| Example 1 Samples | Free Blow Volume(ml) |
|---|---|
| #1-27 | 2099.76 |
| #2-27 | 1756.88 |
| #1-24 | 1480.18 |
| #2-24 | 1480.52 |
| #3-24 | 1114.49 |

Table 6

| Additional PET Copolymer Samples for 23 g preform | | | Free Blow Volume (ml) |
|---|---|---|---|
| IPA (mole%) | DEG (mole%) | NDC (mole%) | |
| 3.0 | 2.72 | 0 | 2079 |
| 3.0 | 1.09 | 0 | 2092 |

(continued)

| Additional PET Copolymer Samples for 23 g preform | | | Free Blow Volume (ml) |
|---|---|---|---|
| IPA (mole%) | DEG (mole%) | NDC (mole%) | |
| 3.0 | 2.00 | 0 | 2205 |
| 0 | 1.09 | 0.5 | 1523 |

Example 6

In order to further demonstrate the benefit of the PET Copolymer of the present invention, light-weighted preforms and bottles were produced. Instead of the normal 27 g preform for 500 ml bottles, 23 g preforms were produced and were blown into the same 500 ml bottle mold used in Example 1. The injection molding was performed with a lab-scale Arburg 75 unit cavity injection machine into a conventional preform mold as illustrated in Fig 1. The preforms were then stretch blow molded with a SBO-1 stretch blow molding machine into 500 ml Coca-Cola Contour bottle as in Fig 3. The preform IV was measured according to ASTM D 4603-96 and the sidewall deflection and thermal expansion were measured as described above.

The data in Table 7 shows that the combination of low DEG, low NDC PET Copolymer has higher crystallinity, higher sidewall rigidity and increased thermal stability as compared to conventional resin compositions.

Table 7

| Resin Composition | | | IV (dL/g) | Bottle Sidewall Thickness (mm) | Sidewall Deflection (Kgf) | Thermal Expansion (%) |
|---|---|---|---|---|---|---|
| mole% IPA | mole% DEG | mole% NDC | | | | |
| 3.00 | 2.72 | 0 | 0.794 | 0.23 | 6.49 | 3.60 |
| 3.00 | 1.09 | 0 | 0.782 | 0.25 | 7.25 | 2.80 |
| 3.00 | 2.00 | 0 | 0.773 | 0.25 | 6.69 | 2.50 |
| 0 | 1.09 | 0.5 | 0.779 | 0.25 | 7.30 | 2.20 |
| 0 | 1.09 | 1 | 0.788 | 0.24 | 6.86 | 3.00 |

Example 7

In order to demonstrate the effect of reduced natural stretch ratio on injection molding cycle time, two PET resins were made, a Conventional PET resin having a conventional formula and a PET Copolymer made in accordance with an embodiment of this invention. The compositions are shown in Table 8. The free blow volumes of the Conventional PET resin and the PET Copolymer were determined in accordance with the procedure described above and four sets of preforms, 7A, 7B, 7C, and 7D, were made. Preforms 7A and 7C were both made with the Conventional PET resin using with a conventional preform design (Conv) as illustrated in Fig. 1. Preforms 7B and 7D were both made with the PET Copolymer using an unconventional preform design (Uncon) as illustrated in Fig. 2. The physical dimensions and molding cycle times of the preforms are set forth in Table 9.

Table 8

| | IPA (mole%) | DEG (mole%) | NDC (mole%) |
|---|---|---|---|
| Conventional PET | 3 | 2.72 | 0 |
| PET Copolymer | 0 | 1.09 | 0.5 |

Table 9

| Preform | 7A | 7B | 7C | 7D |
|---|---|---|---|---|
| Resin | Conventional PET | PET Copolymer | Conventional PET | PET Copolymer |
| Design | Conv | Uncon | Conv | Uncon |
| Preform weight (grams) | 24 | 24 | 27 | 27 |
| Hoop stretch ratio | 4.86 | 4.93 | 5.24 | 4.35 |
| Axial stretch ratio | 2.52 | 1.95 | 2.34 | 1.95 |
| Preform stretch ratio | 12.25 | 9.61 | 12.26 | 8.48 |
| Height (mm) | 80.74 | 103.99 | 86.95 | 103.99 |
| Inside diameter (mm) | 13.69 | 13.50 | 12.69 | 15.30 |
| Wall thickness (mm) | 3.43 | 2.65 | 3.86 | 2.80 |
| Cycle Time (sec) | 23.6 | 17.9 | 28.5 | 21.0 |

The data in Table 9 demonstrates that the injection molding cycle time can be reduced and the injection molding productivity can be increased by 24 to 26% at the same preform weight by using the PET Copolymer made in accordance with an embodiment of this invention when used in conjunction with a preform designed to take advantage of the lower natural stretch ratio of the PET Copolymer resin.

Examples 8-15

The following preforms whose physical properties are set forth in Table 10 illustrate additional embodiments of this invention. Each of Examples 8-15 are made with the PET Copolymer Resin identified in Table 8 and have configurations generally like that of preform 11 illustrated in Fig. 2.

Table 10

| Example | 8 | 9 | 10 | 11 | 12 | 13 | 14 | 15 |
|---|---|---|---|---|---|---|---|---|
| Preform weight (grams) | 24 | 24 | 24 | 27 | 27 | 27 | 27 | 23 |
| Hoop stretch ratio | 4.86 | 5.0 | 4.35 | 4.93 | 4.35 | 4.86 | 5.0 | 4.67 |
| Axial stretch ratio | 2.2 | 2.06 | 2.2 | 1.95 | 2.2 | 22 | 2.06 | 2.52 |
| Preform stretch ratio | 10.69 | 10.3 | 9.57 | 9.61 | 9.57 | 10.69 | 10.3 | 11.76 |
| Height (mm) | 92.48 | 98.49 | 92.48 | 103,99 | 92.48 | 92.48 | 98.49 | 80.73 |
| Inside diameter (mm) | 13.68 | 13.3 | 15.29 | 13.5 | 15.29 | 13.68 | 13.30 | 14.24 |
| Wall thickness (mm) | 2.95 | 2.8 | 2.64 | 3.06 | 3.15 | 3.4 | 3.33 | 3.15 |

Example 16

The data in Table 1 below shows the comparison of the free blow volume and crystallinity of various PET resins. In this Example, the free-blow pressure used was 655 kPag (95 psig). In this Example, the PET Copolymers of the present invention having low DEG and low NDC content exhibit a reduction in free blow volume of 21 to 27 percent relative to Conventional PET resin.

Table 11

| Resin Composition | | | Free blow volume (ml) | Strain Induced Crystallinity (%) |
|---|---|---|---|---|
| mole% IPA | mole% DEG | mole% NDC | | |
| 3 | 2.80 | 0 | 713 | 27.1 |
| 0 | 1.60 | 0 | 532 | 28.1 |

(continued)

| Resin Composition | | | Free blow volume (ml) | Strain Induced Crystallinity (%) |
|---|---|---|---|---|
| mole% IPA | mole% DEG | mole% NDC | | |
| 0 | 1.60 | 0.25 | 542 | 27.8 |
| 0 | 1.60 | 0.50 | 520 | 27.0 |
| 0 | 1.60 | 1.00 | 560 | 28.1 |
| 0.50 | 1.60 | 0 | 529 | 27.2 |

Example 17

In this Example, the sidewall deflection test was performed on the free blow bubbles of Example 16 according to the method described above. Because the bubble volumes were different for each resin due to their different inherent natural stretch ratio, the rigidity values were normalized by the bubble diameter and bubble thickness. The normalized values are shown in Table 12.

Table 12

| Resin Composition | | | Rigidity (Kgf/cm) |
|---|---|---|---|
| mole%IP A | mole% DEG | mole% NDC | |
| 3 | 2.80 | 0 | 16.6 |
| 0 | 1.60 | 0 | 25.0 |
| 0 | 1.60 | 0.25 | 27.9 |
| 0 | 1.60 | 0.50 | 29.3 |
| 0 | 1.60 | 1.00 | 25.2 |

These results show that a maximum sidewall rigidity is obtained when about 0.5 mole% NDC is present as a comonomer.

Example 18

Two resins, a PET Copolymer made in accordance with an embodiment of this invention and a Conventional PET resin were injection molded into preforms on a 48 cavity Husky XL 300 machine. The control was molded into a 52-gram 2-L preform with sidewall thickness of 3.93 mm, while the PET Copolymer was molded into a 50-gram 2-L preform with a sidewall thickness of 3.71 mm. Both preforms were of conventional design. The preforms were then blown into bottles using a Sidel SBO 16 machine. The bottles were tested for thermal stability, sidewall deflection, and shelf life.
The thermal stability of the bottles made from the two resins were tested as in the previous Examples. The results set forth in Table 13 show that with the PET Copolymer, a 50-gram bottle performed similarly or better than the 52-gram control, in spite of the 2-g light weighting in the bottles.

Table 13

| Resin | % Height Change | % Diameter Increase | Max. Fill Point Drop (in) |
|---|---|---|---|
| PET Copolymer 50gram preform | 2.0 | 1.72 | 1.541 |
| Conventional PET 52 gram preform | 1.9 | 2.30 | 1.562 |

The sidewall deflection tests were performed on the above described bottles as per the test method described hereinbefore. The results set forth in Table 14 show that the bottles made from the PET Copolymer performed better than bottles made from the control, even though the bottles made from the PET Copolymer weigh 2 grams less than the bottles made from the Conventional PET.
The bottles from both the PET Copolymer and Conventional PET resins were filled with 385.84 kPa of carbon dioxide and tested for shelf life. The shelf life of the bottles were defined as the time for the bottle to lose 17.5% of the carbon dioxide in the bottle, or until the carbon dioxide pressure inside the bottles decreased to 318.3 kPa. Normally, a heavier bottle having a thicker sidewall thickness has a longer the shelf life. The shelf life values are shown in the following Table 14. It can be seen that 2-L bottles made from 50 gram preforms of the PET Copolymer resin have essentially the same shelf life as 2-L bottles made from 52 gram preform made using the Conventional PET resin.

Table 14

| Resin | Sidewall deflection (Kgf) | FIZR shelf life | Std. Dev. |
|---|---|---|---|
| PET Copolymer 50 gram preform | 1.63 | 13.9 week | -03 / +40.4 |
| Conventional PET 52 gram preform | 1.40 | 13.7 week | -0.4 / +0.6 |

**Claims**

1. A container made from an injection molded preform, the preform having an open ended mouth forming portion, an intermediate body forming portion, and a closed base forming portion and comprising a poly(ethylene terephthalate) copolymer (PET Copolymer) comprising a diol component having repeat units from ethylene glycol and a non-ethylene glycol diol component and a diacid component having repeat units from terephthalic acid and a non-terephthalic acid diacid component, wherein the total amount of non-ethylene glycol diol component and non-terephthatie acid diacid component present in the PET Copolymer is in an amount from 0-2 mole percent to less than 2.2 mole percent, the repeat units from the non-terephthalic acid diacid component are present in the PET Copolymer in an amount from 0.1 to 1.0 mole percent, and the repeat units from the non-ethylene glycol diol component are present in the PET Copolymer in an amount from 0.1 to 2.0 mole percent, based on 100 mole percent of the diol component and 100 mole percent of the diacid component.

2. A container as in claim 1 wherein the total amount of non-ethylene glycol diol component and non-tcrephthalic acid diacid component is present in the PET Copolymer in an amount from 1.1 mole percent to 2.1 mole percent.

3. A container as in claim 1 wherein the total amount of non-ethylene glycol diol component and non-terephthalic acid diacid component is present in the PET Copolymer in an amount from 1.2 mole percent to 1.6 mole percent.

4. A container as in claim 1 wherein the repeat units from the non-terephthalic acid diacid component are present in the PET Copolymer in an amount from 0.2 to 0.75 mole percent.

5. A container as in claim 1 wherein the repeat units from the non-terephthalic acid diacid component are present in the PET Copolymer in an amount from 0.25 to 0.6 mole percent.

6. A container as in claim 1 wherein the repeat units from the non-terephthalic acid diacid component are present in the PET Copolymer in an amount from 0.25 to less than 0.5 mole percent.

7. A container as in claim 1 wherein the repeat units from the non-ethylene glycol diol component are present in the PET Copolymer in an amount from 0.5 to 1.6 mole percent.

8. A container as in claim 1 wherein the repeat units from the non-etlaylcne glycol diol component are present in the PET Copolymer in an amount from 0.8 to 1.3 mole percent.

9. A container as in claim 1 wherein the non-terephthalic acid diacid component comprises repeat units from diacids selected from the group consisting of adipic acid, succinic acid, isophthalic acid, phthalic acid, 4,4'-biphenyl dicarboxylic acid, and naphthalenedicarboxylic acid.

10. A container as in claim 1 wherein the non-terephthalic acid diacid component comprises repeat units from 2,6-naphthalenedicarboxylic acid.

11. A container as in claim 1 wherein the non-ethylene glycol diol component comprises repeat units from a diol selected from the group consisting of cyclohexanedimethanol, propanediol, butanediol, and diethylene glycol.

12. A container as in claim 1 wherein the non-ethylene glycol diol component comprises repeat units from diethylene glycol.

**13.** A container as in claim 1 wherein the preform has a stretch ratio in the range from 8 to 12.

**14.** A container as in claim 1 wherein the preform has a stretch ratio in the range from 8 to 10.

**15.** A container as in claim 1 wherein the PET Copolymer is a reaction grade copolymer.

**16.** A container as in claim 1 wherein the intermediate body forming portion of the preform has a wall thickness from 1.5 to 8 mm and an inside diameter from 10 to 30 mm, and the preform has a finish, a closed end opposite the finish, and a height from the closed end to the finish of from 50 to 150 mm.

**17.** A container as in claim 1 wherein the container has a volume within the range from 0.25 to 3 liters.

**18.** A container as in claim 1 wherein the container is a bottle, drum, carafe, or cooler.

**19.** A preform having an open ended mouth forming portion, an intermediate body forming portion, and a closed base forming portion, and comprising a PET Copolymer comprising a diol component having repeat units from ethylene glycol and a non-ethylene glycol diol component and a diacid component having repeat units from terephthalic acid and a non-terephthalic acid diacid component, wherein the total amount of non-ethylene glycol diol component and non-terephthalic acid diacid component present in the PET Copolymer is in an amount from 0.2 mole percent to less than 2.2 mole percent, the repeat units from the non-terephthalic acid diacid component are present in the PET Copolymer in an amount from 0.1 to 1.0 mole percent, and the repeat units from the non-ethylene glycol diol component are present in the PET Copolymer in an amount from 0.1 to 2.0 mole percent, based on 100 mole percent of the diol component and 100 mole percent of the diacid component.

**20.** A preform as in claim 19 wherein the non-terephthalic acid diacid component comprises repeat units from 2,6-naphthalenedicarboxylic acid and the non-ethylene glycol diol component comprises repeat units from diethylene glycol.

**21.** The preform as in claim 20 wherein 2,6-naphthalenedicarboxylic acid is present from 0.2 to 0.75 mole percent and the diethylene glycol is present in an amount of 0.5 to 1.6 mole percent.

**22.** A preform as in claim 19 wherein the preform has a stretch ratio in the range from 8 to 12.

**23.** A preform as in claim 19 wherein the preform has a stretch ratio in the range from 8 to 10.

**24.** A preform as in claim 19 wherein the PET Copolymer is a reaction grade copolymer.

**25.** A preform for use in making a container comprising a PET Copolymer comprising a diol component having repeat units from ethylene glycol and a non-ethylene glycol diol component and a diacid component having repeat units from terephthalic acid and a non-terephthalic acid diacid component;
wherein the total amount of non-ethylene glycol diol component and non-terephthalic acid diacid component present in the PET Copolymer is in an amount from 0.2 mole percent to less than 3.0 mole percent based on 100 mole percent of the diol component and 100 mole percent of the diacid component, and
wherein the non-ethylene glycol diol component is present in an amount of from 0.1 to 2.0 mole percent and the non-terephthalic acid diacid component is present in an about of 0.1 to 1.0 mole percent.

**26.** A preform as in claim 25 wherein the total amount of non-ethylene glycol diol component and non-terephthalic acid diacid component present in the PET Copolymer is in an amount from 0.2 mole percent to less than 2.6 mole percent. 2.6 mole

**27.** A preform as in claim 25 wherein the non-ethylene glycol diol component is derived from diethylene glycol,

**28.** A preform as in claim 25 wherein the non-terephthalic acid diacid component is derived from 2,6-naphthalenedicarboxylic acid or its diester.

**29.** A preform as in claim 25 wherein the preform has a stretch ratio in the range from 8 to 12.

**30.** A preform as in claim 25 wherein the preform has a stretch ratio in the range from 8 to 10.

**31.** A packaged beverage comprising a container made from an injection molded preform and a beverage disposed in the container, wherein the preform:

(a) has an open ended mouth forming portion, an intermediate body forming portion, and a closed base forming portion, and

(b) comprises a PET Copolymer comprising a diol component having repeat units from ethylene glycol and a non-ethylene glycol diol component and a diacid component having repeat units from terephthalic acid and a non-terephthalic acid diacid component, wherein the total amount of non-ethylene glycol diol component and non-terephthalic acid diacid component present in the PET Copolymer is in an amount from 0.2 mole percent to less than 2,2 mole percent, the repeat units from the non-terephthalic acid diacid component are present in the PET Copolymer in an amount from 0.1 to 1.0 mole percent, and the repeat units from the non-ethylene glycol diol component are present in the PET Copolymer in an amount from 0.1 to 2.0 mole percent, based on 100 mole percent of the diol component and 100 mole percent of the diacid component.

**32.** A packaged beverage as in claim 31 wherein the repeat units from the non-terephthalic acid diacid component are 2,6-naphthalenedicarboxylic acid and wherein the repeat units from the non-ethylene glycol diol component are diethylene glycol.

**33.** A packaged beverage as in claim 31 wherein the preform has a stretch ratio in the range from 8 to 12.

**34.** A packaged beverage as in claim 31 wherein the preform has a stretch ratio in the range from 8 to 10,

**35.** A method for reducing the cycle time for making a container comprising the steps of:

(1) providing a PET Copolymer melt comprising a diol component having repeat units from ethylene glycol and a non-ethylene glycol diol component and a diacid component having repeat units from terephthalic acid and a non-terephihalic acid diacid component, wherein the total amount of non-ethylene glycol diol component and non-terephthalic acid diacid component is present in the PET Copolymer in an amount from 02 mole percent to less than 2.2 mole percent, the repeat units from the no -terephthalic acid diacid component are present in the PET Copolymer in an amount from 0.1 to 1.0 mole percent, and the repeat units from the non-ethylene glycol diol component are present in the PET Copolymer in an amount from 0.1 to 2.0 mole percent, based on 100 mole percent of the diol component and 100 mole percent of the diacid component,
(2) then injecting the PET Copolymer into a mold,
(3) then cooling the mold and the contained polymer,
(4) then releasing from the mold a preform,
(5) then reheating the preform, and
(6) then blow molding the preform into a container;

wherein the cycle time for making the container is reduced as compared to a second cycle time for making a second container comprising a poly(ethylene terephthalate) resin having comonomer modification greater than 2.2 mole percent of a combination of a non-ethylene glycol diol component and a non-terephthalic acid diacid component_

**36.** A method as in claim 35 wherein the repeat units from the non-terephthalic acid diacid component are 2,6-naphthalenediearboxylic acid and wherein the repeat units from the non-ethylene glycol diol component are diethylene glycol.

**37.** A method as in claim 35 wherein the preform has a stretch ratio in the range from 8 to 12.

**38.** A method as in claim 35 wherein the preform has a stretch ratio in the range from 8 to 10.

**39.** A method for making a container comprising blow molding an injection molded preform

(a) having an open ended mouth forming portion, an intermediate body forming portion, and a closed base forming portion, and

(b) comprising a PET Copolymer comprising a diol component having repeat units from ethylene glycol and a non-ethylene glycol diol component and a diacid component having repeat units from terephthalic acid and a non-terephthalic acid diacid component, wherein the total amount of non-ethylene glycol diol component and non-terephthalic acid diacid component present in the PET Copolymer is in an amount from 0.2 mole percent to less than 2.2 mole percent, the repeat units from the non-terephthalic acid diacid component are present in the PET Copolymer in an amount from 0.1 to 1.0 mole percent, and the repeat units from the non-ethylene glycol diol component are present in the PET Copolymer in an amount from 0.1 to 2,0 mole percent, based on 100 mole percent of the diol component and 100 mole percent of the diacid component.

40. A method as in claim 39 wherein the repeat units from the non-terephthalic acid diacid component are 2,6-naphthalenedicarboxylic acid and wherein the repeat units from the non-ethylene glycol diol component are diethylene glycol.

41. A method as in claim 39 wherein the preform has a stretch ratio in the range from 8 to 12.

42. A method as in claim 39 wherein the preform has a stretch ratio in the range from 8 to 10.

43. A method for making a preform for use in making containers comprising injection molding a PET Copolymer comprising a diol component having repeat units from ethylene glycol and a non-ethylene glycol diol component and a diacid component having repeat units from terephthalic acid and a non-terephthalic acid diacid component, wherein the total amount of non-ethylene glycol diol component and non-terephthalic acid diacid component present in the PET Copolymer is in an amount from 0.2 mole percent to less than 2.2 mole percent, the repeat units from the non-terephthalic acid diacid component are present in the PET Copolymer in an amount from 0.1 to 1.0 mole percent, and the repeat units from the non-ethylene glycol diol component are present in the PET Copolymer in an amount from 0.1 to 2.0 mole percent, based on 100 mole percent of the diol component and 100 mole percent of the diacid component.

44. A method as in claim 43 wherein the repeat units from the non-terephthalic acid diacid component are 2,6-naphthalenedicarboxylic acid and wherein the repeat units from the non-ethylene glycol diol component are diethylene glycol,

45. A method as in claim 43 wherein the preform has a stretch ratio in the range from 8 to 12.

46. A method as in claim 43 wherein the preform has stretch ratio in the range from 8 to 10.

**Patentansprüche**

1. Ein Behälter, hergestellt aus einem spritzgegossenen Vorformling, wobei der Vorformling einen Teil, welcher eine offene Mündung bildet, einen Teil, welcher einen Mittelkörper bildet, und einen Teil, welcher einen geschlossenen Boden bildet, besitzt und ein Poly(ethylenterephthalat)copolymer (PET-Copolymer) enthält, enthaltend eine Diolkomponente mit Wiederholungseinheiten aus Ethylenglycol und einer Nicht-Ethylenglycol-Diolkomponente und eine Disäurekomponente mit Wiederholungseinheiten aus Terephthalsäure und einer Nicht-Terephthalsäure-Disäurekomponente, wobei die in dem PET-Copolymer vorliegende Gesamtmenge an Nicht-Ethylenglycol-Diolkomponente und Nicht-Terephthalsäure-Disäurekomponente eine Menge von 0,2 Molprozent bis weniger als 2,2 Molprozent ist, die Wiederholungseinheiten aus der Nicht-Terephthalsäure-Disäurekomponente in dem PET-Copolymer in einer Menge von 0,1 bis 1,0 Molprozent vorliegen und die Wiederholungseinheiten aus der Nicht-Ethylenglycol-Diolkomponente in dem PET-Copolymer in einer Menge von 0,1 bis 2,0 Molprozent vorliegen, bezogen auf 100 Molprozent der Diolkomponente und 100 Molprozent der Disäurekomponente.

2. Ein Behälter wie in Anspruch 1, wobei die Gesamtmenge an Nicht-Ethylenglycol-Diolkomponente und Nicht-Terephthalsäure-Disäurekomponente in dem PET-Copolymer in einer Menge von 1,1 Molprozent bis 2,1 Molprozent vorliegt.

3. Ein Behälter wie in Anspruch 1, wobei die Gesamtmenge an Nicht-Ethylenglycol-Diolkomponente und Nicht-Terephthalsäure-Disäurekomponente in dem PET-Copolymer in einer Menge von 1,2 Molprozent bis 1,6 Molprozent vorliegt.

4. Ein Behälter wie in Anspruch 1, wobei die Wiederholungseinheiten aus der Nicht-Terephthalsäure-Disäurekomponente In dem PET-Copolymer in einer Menge von 0.2 bis 0,75 Molprozent vorliegen.

5. Ein Behälter wie in Anspruch 1, wobei die Wiederholungseinheiten aus der Nicht-Terephthalsäure-Disäurekomponente in dem PET-Copolymer in einer Menge von 0,25 bis 0,6 Molprozent vorliegen.

6. Ein Behälter wie in Anspruch 1, wobei die Wiederholungseinhelten aus der Nicht-Terephthalsäure-Disäurekomponente in dem PET-Copolymer in einer Menge von 0,25 bis weniger als 0.5 Molprozent vorliegen.

7. Ein Behälter wie in Anspruch 1, wobei die Wiederholungseinheiten aus der Nicht-Ethylenglycol-Diolkomponente in dem PET-Copolymer in einer Menge von 0,5 bis 1,6 Molprozent vorliegen.

8. Ein Behälter wie in Anspruch 1, wobei die Wiederholungseinheiten aus der Nicht-Ethylenglycol-Diolkomponente in dem PET-Copolymer in einer Menge von 0,8 bis 1,3 Molprozent vorliegen.

9. Ein Behälter wie in Anspruch 1, wobei die Nicht-Terephthalsäure-Disäurekomponente Wiederholungseinheiten aus Disäuren, ausgewählt aus der Gruppe, bestehend aus Adipinsäure, Succinsäure, isophthalsäure, Phthalsäure, 4,4'-Biphenyldicarbonsäure und Naphthalindicarbonsäure, enthält.

10. Ein Behälter wie in Anspruch 1, wobei die Nicht-Terephthalsäure-Disäurekomponente Wiederholungseinheiten aus 2,6-Naphthalindicarbonsäure enthält.

11. Ein Behälter wie in Anspruch 1, wobei die Nicht-Ethylenglycol-Diolkomponente Wiederholungseinheiten aus einem Diol, ausgewählt aus der Gruppe, bestehend aus Cyclohexandimethanol, Propandiol. Butandiol und Diethylenglycol, enthält.

12. Ein Behälter wie in Anspruch 1, wobei die Nicht-Ethylenglycol-Diolkomponente Wiederholungseinheiten aus Diethylenglycol enthält.

13. Ein Behälter wie in Anspruch 1, wobei der Vorformling ein Streckverhältnis im Bereich von 8 bis 12 besitzt.

14. Ein Behälter wie in Anspruch 1, wobei der Vorformling ein Streckverhältnis im Bereich von 8 bis 10 besitzt.

15. Ein Behälter wie in Anspruch 1, wobei das PET-Copolymer ein Copolymer in Synthesequalität ist.

16. Ein Behälter wie in Anspruch 1, wobei der Teil des Vorformlings, welcher den Mittelkörper bildet, eine Wandstärke von 1,5 bis 8 mm und einen Innendurchmesser von 10 bis 30 mm besitzt und der Vorformling einen Abschluss, ein geschlossenes Ende gegenüber dem Abschluss und eine Höhe vom geschlossenen Ende bis zum Abschluss von 50 bis 150 mm besitzt.

17. Ein Behälter wie in Anspruch 1, wobei der Behälter ein Volumen innerhalb des Bereichs von 0,25 bis 3 Liter besitzt.

18. Ein Behälter wie in Anspruch 1, wobei der Behälter eine Flasche, ein Fass, eine Karaffe oder ein Kühlbehälter ist.

19. Ein Vorformling, der einen Teil, welcher eine offene Mündung bildet, einen Teil, welcher einen Mittelkörper bildet, und einen Teil, welcher einen geschlossenen Boden bildet, besitzt und ein PET-Copolymer enthält, enthaltend eine Diolkomponente mit Wiederholungseinheiten aus Ethylenglycol und einer Nicht-Ethylenglycol-Diolkomponente und eine Disäurekomponente mit Wiederholungseinheiten aus Terephthalsäure und einer Nicht-Terephthalsäure-Disäurekomponente, wobei die in dem PET-Copolymer vorliegende Gesamtmenge an Nicht-Ethylenglycol-Diolkomponente und Nicht-Terephthalsäure-Disäurekomponente eine Menge von 0,2 Molprozent bis weniger als 2,2 Molprozent ist, die Wiederholungseinheiten aus der Nicht-Terephthalsäure-Disäurekomponente in dem PET-Copolymer in einer Menge von 0,1 bis 1,0 Molprozent vorliegen und die Wiederholungseinheiten aus der Nicht-Ethylenglycol-Diolkomponente in dem PET-Copolymer in einer Menge von 0,1 bis 2,0 Molprozent vorliegen, bezogen auf 100 Molprozent der Diolkomponente und 100 Molprozent der Disäurekomponente.

20. Ein Vorformling wie in Anspruch 19, wobei die Nicht-Terephthalsäure-Disäurekomponente Wiederholungseinheiten aus 2,6-Naphthalindicarbonsäure enthält und die Nicht-Ethylenglycol-Diolkomponente Wiederholungseinheiten aus Diethylenglycol enthält.

21. Der Vorformling wie in Anspruch 20, wobei 2,6-Naphthalindicarbonsäure in 0,2 bis 0,75 Molprozent vorliegt und das Diethylenglycol in einer Menge von 0,5 bis 1,6 Molprozent vorliegt.

**22.** Ein Vorformling wie in Anspruch 19, wobei der Vorformling ein Streckverhältnis im Bereich von 8 bis 12 besitzt.

**23.** Ein Vorformling wie in Anspruch 19, wobei der Vorformling ein Streckverhältnis im Bereich von 8 bis 10 besitzt.

**24.** Ein Vorformling wie in Anspruch 19, wobei das PET-Copolymer ein Copolymer in Synthesequalität ist.

**25.** Ein Vorformling zur Verwendung bei der Herstellung eines Behälters, enthaltend ein PET-Copolymer, das eine Diolkomponente mit Wiederholungseinheiten aus Ethylenglycol und einer Nicht-Ethylenglycol-Diolkomponente und eine Disäurekomponente mit Wiederholungseinheiten aus Terephthalsäure und einer Nicht-Terephthalsäure-Disäurekomponente enthält,
wobei die in dem PET-Copolymer vorliegende Gesamtmenge an Nicht-Ethylenglycol-Diolkomponente und Nicht-Terephthalsäure-Disäurekomponente eine Menge von 0,2 Molprozent bis weniger als 3,0 Molprozent ist, bezogen auf 100 Molprozent der Diolkomponente und 100 Molprozent der Disäurekomponente, und
wobei die Nicht-Ethylenglycol-Diolkomponente in einer Menge von 0,1 bis 2,0 Molprozent vorliegt und die Nicht-Terephthalsäure-Disäurekomponente in einer Menge von 0,1 bis 1,0 Molprozent vorliegt.

**26.** Ein Vorformling wie in Anspruch 25, wobei die in dem PET-Copolymer vorliegende Gesamtmenge an Nicht-Ethylenglycol-Diolkomponente und Nicht-Terephthalsäure-Disäurekomponente eine Menge von 0,2 Molprozent bis weniger als 2,6 Molprozent ist.

**27.** Ein Vorformling wie in Anspruch 25, wobei die Nicht-Ethylenglycol-Diolkomponente von C7iethylanglycol hergeleitet ist.

**28.** Ein Vorformling wie in Anspruch 25, wobei die Nicht-Terephthalsäure-Disäurekomponente von 2,6-Naphthalindicarbonsäure oder deren Diester hergeleitet ist.

**29.** Ein Vorformling wie in Anspruch 25, wobei der Vorformling ein Streckverhältnis im Bereich von 8 bis 12 besitzt.

**30.** Ein Vorformling wie in Anspruch 25, wobei der Vorformling ein Streckverhältnis im Bereich von 8 bis 10 besitzt.

**31.** Ein verpacktes Getränk, umfassend einen Behälter, der aus einem spritzgegossenen Vorformling hergestellt ist, und ein in dem Behälter befindliches Getränk, wobei der Vorformling:

(a) einen Teil, welcher eine offene Mündung bildet, einen Teil, welcher einen Mittelkörper bildet, und einen Teil, welcher einen geschlossenen Boden bildet, besitzt und
(b) ein PET-Copolymer enthält, enthaltend eine Diolkomponente mit Wiederholungseinheiten aus Ethylenglycol und einer Nicht-Ethylenglycol-Diolkomponente und eine Disäurekomponente mit Wiederholungseinheiten aus Terephthalsäure und einer Nicht-Terephthalsäure-Disäurekomponente, wobei die in dem PET-Copolymer vorliegende Gesamtmenge an Nicht-Ethylenglycol-Diolkomponente und Nicht-Terephthalsäure-Disäurekomponente eine Menge von 0,2 Molprozent bis weniger als 2,2 Molprozent ist, die Wiederholungseinheiten aus der Nicht-Terephthalsäure-Disäurekomponente in dem PET-Copolymer in einer Menge von 0,1 bis 1,0 Molprozent vorliegen und die Wiederholungseinheiten aus der Nicht-Ethylenglycol-Diolkomponente in dem PET-Copolymer in einer Menge von 0,1 bis 2,0 Molprozent vorliegen, bezogen auf 100 Molprozent der Diolkomponente und 100 Molprozent der Disäurekomponente.

**32.** Ein verpacktes Getränk wie in Anspruch 31, wobei die Wiederholungseinheiten aus der Nicht-Terephthalsäure-Disäurekomponente 2,6-Naphthalindicarbonsäure sind und wobei die Wiederholungseinheiten aus der Nicht-Ethylenglycol-Diolkomponente Diethylenglycol sind.

**33.** Ein verpacktes Getränk wie in Anspruch 31, wobei der Vorformling ein Steckverhältnis im Bereich von 8 bis 12 besitzt.

**34.** Ein verpacktes Getränk wie in Anspruch 31, wobei der Vorformling ein Streckverhältnis im Bereich von 8 bis 10 besitzt.

**35.** Ein Verfahren zur Verringerung der Zykluszeit zur Herstellung eines Behälters, umfassend die Schritte:

(1) Bereitstellen einer PET-Copolymerschmeize, die eine Diolkomponente mit Wiederholungseinheiten aus Ethylenglycol und einer Nicht-Ethylenglycol-Diolkomponente und eine Disäurekomponente mit Wiederholungseinheiten aus Terephthalsäure und einer Nicht-Terephthaisäure-Disäurekomponente enthält, wobei die Gesamtmenge an Nicht-Ethylenglycol-Diolkomponente und Nicht-Terephthalsäure-Disäurekomponente in dem PET-Copolymer in einer Menge von 0,2 Molprozent bis weniger als 2,2 Molprozent vorliegt, die Wiederholungseinheiten aus der Nicht-Terephthalsäura-Disäurakomponente in dem PET-Copolymer in einer Menge von 0,1 bis 1,0 Molprozent vorliegen und die Wiederholungseinheiten aus der Nicht-Ethylenglycol-Diolkomponente in dem PET-Copolymer in einer Menge von 0,1 bis 2,0 Molprozent vorliegen, bezogen auf 100 Molprozent der Diolkomponente und 100 Molprozent der Disäurekomponente.

(2) anschließend Spritzen des PET-Copolymers in eine Form,

(3) anschließend Abkühlen der Form und des enthaltenen Polymers.

(4) anschließend Lösen eines Vorformlings aus der Form,

(5) anschließend Wiedererwärmen des Vorformlings und

(6) anschließend Blasformen des Vorformlings zu einem Behälter,

wobei die Zykluszeit zur Herstellung des Behälters verkürzt ist, verglichen mit einer zweiten Zykluszeit zur Herstellung eines zweiten Behälters, der ein Poly-(ethylenterephthalat)-Harz mit einer Comonomer-Modifikation von mehr als 2,2 Molprozent einer Kombination aus Nicht-Ethylenglycol-Diolkomponente und einer Nicht-Terephthalsäure-Disäurekomponente enthält.

36. Ein Verfahren wie in Anspruch 35, bei dem die Wiederholungseinheiten aus der Nicht-Terephthalsäure-Disäurekomponente 2,6-Naphthalindicarbonsäure sind und bei dem die Wiederholungseinheiten aus der Nicht-Ethylenglycol-Diolkomponente Diethylenglycol sind.

37. Ein Verfahren wie in Anspruch 35, bei dem der Vorformling ein Streckverhältnis im Bereich von 8 bis 12 besitzt.

38. Ein Verfahren wie in Anspruch 35, bei dem der Vorformling ein Streckverhältnis im Bereich von 8 bis 10 besitzt.

39. Ein Verfahren zur Herstellung eines Behälters, umfassend das Blasformen eines spritzgegossenen Vorformlings, der

(a) einen Teil, welcher eine offene Mündung bildet, einen Teil, welcher einen Mittelkörper bildet, und einen Teil, welcher einen geschlossenen Boden bildet, besitzt und

(b) ein PET-Copolymer enthält, enthaltend eine Diolkomponente mit Wiederholungseinheiten aus Ethylenglycol und einer Nicht-Ethylenglycol-Diolkomponente und eine Disäurekomponente mit Wiederholungseinheiten aus Terephthalsäure und einer Nicht-Terephthalsäure-Disäurekomponente, wobei die in dem PET-Copolymer vorliegende Gesamtmenge an Nicht-Ethylenglycol-Diolkomponente und Nicht-Terephthalsäure-Disäurekomponente eine Menge von 0,2 Molprozent bis weniger als 2,2 Molprozent ist, die Wiederholungseinheiten aus der Nicht-Terephthalsäure-Disäurekomponente in dem PET-Copolymer in einer Menge von 0,1 bis 1,0 Molprozent vorliegen und die Wiederholungseinheiten aus der Nicht-Ethylenglycol-Diolkomponente in dem PET-Copolymer in einer Menge von 0,1 bis 2,0 Molprozent vorliegen, bezogen auf 100 Molprozent der Diolkomponente und 100 Molprozent der Dlsäurekomponente.

40. Ein Verfahren wie in Anspruch 39, bei dem die Wiederholungseinheiten aus der Nicht-Terephthalsäure-Disäurekomponente 2,6-Naphthalindicarbonsäure sind und bei dem die Wiederholungseinheiten aus der Nicht-Ethylenglycol-Diolkomponente Diethylenglycol sind.

41. Ein Verfahren wie in Anspruch 39, bei dem der Vorformling ein Streckverhältnis im Bereich von 8 bis 12 besitzt.

42. Ein Verfahren wie in Anspruch 39, bei dem der Vorformling ein Streckverhältnis im Bereich von 8 bis 10 besitzt.

43. Ein Verfahren zur Herstellung eines Vorformlings zur Verwendung bei der Herstellung von Behältern, umfassend das Spritzgief5en eines PET-Copolymers, enthaltend eine Diolkomponente mit Wiederholungseinheiten aus Ethylenglycol und einer Nicht-Ethylenglycol-Diolkomponente und eine Disäurekomponente mit Wiederholungseinheiten aus Terephthalsäure und einer Nicht-Terephthalsäure-Disäurekomponente, wobei die in dem PET-Copolymer vorliegende Gesamtmenge an Nicht-Ethylenglycol-Dlolkomponente und Nicht-Terephthalsäure-Disäurekomponente eine Menge von 0,2 Molprozent bis weniger als 2,2 Molprozent ist, die Wiederholungseinheiten aus der Nicht-Terephthalsäure-Disäurekomponente in dem PET-Copolymer in einer Menge von 0,1 bis 1.0 Molprozent vorliegen und die Wiederholungseinheiten aus der Nicht-Ethylenglycol-Diolkomponente in dem PET-Copolymer in einer Menge von 0,1 bis 2,0 Molprozent vorliegen, bezogen auf 100 Molprozent der Diolkomponente und 100 Molprozent der Disäurekomponente.

**44.** Ein Verfahren wie in Anspruch 43, bei dem die Wiederholungseinheiten aus der Nicht-Terephthalsäure-Disäurekomponente 2,6-Naphthalindicarbonsäure sind und bei dem die Wiederholungseinheiten aus der Nicht-Ethylenglycol-Diolkomponente Diethylenglycol sind.

**45.** Ein Verfahren wie in Anspruch 43, bei dem der Vorformling ein Streckverhältnis im Bereich von 8 bis 12 besitzt.

**46.** Ein Verfahren wie in Anspruch 43, bei dem der Vorformling ein Streckverhältnis im Bereich von 8 bis 10 besitzt.

**Revendications**

**1.** Récipient constitué d'une préforme moulée par injection, la préforme ayant une portion formant embouchure à extrémité ouverte, une portion formant corps intermédiaire, et une portion formant base fermée et comprenant un copolymère de poly(éthylène téréphtalate) (copolymère PET) comprenant un composant diol ayant des motifs de répétition d'éthylène glycol et un composant diol non-éthylène glycol et un composant diacide ayant des motifs de répétition d'acide téréphtalique et un composant diacide non-acide téréphtalique, **caractérisé en ce que** la quantité totale de composant diol non-éthylèhe glycol et de composant diacide non-acide téréphtalique présents dans le copolymère PET est en une quantité de 0,2 pour cent en moles à moins de 2,2 pour cent en moles, les motifs de répétition du composant diacide non-acide téréphtalique sont présents dans le copolymère PET en une quantité de 0,1 à 1,0 pour cent en moles, et les motifs de répétition du composant diol non-éthylène glycol sont présents dans le copolymère PET en une quantité de 0,1 à 2,0 pour cent en moles, sur la base de 100 pour cent en moles du composant diol et 100 pour cent en moles du composant diacide.

**2.** Récipient selon la revendication 1 **caractérisé en ce que** la quantité totale de composant diol non-éthylène glycol et de composant diacide non-acide téréphtalique est présente dans le copolymère PET en une quantité de 1,1 pour cent en moles à 2,1 pour cent en moles.

**3.** Récipient selon la revendication 1 **caractérisé en ce que** la quantité totale de composant diol non-éthylène glycol et de composant diacide non-acide téréphtalique est présente dans le copolymère PET en une quantité de 1,2 pour cent en moles à 1,6 pour cent en moles.

**4.** Récipient selon la revendication 1 **caractérisé en ce que** les motifs de répétition du composant diacide non-acide téréphtalique sont présents dans le copolymère PET en une quantité de 0,2 à 0,75 pour cent en moles.

**5.** Récipient selon la revendication 1 **caractérisé en ce que** les motifs de répétition du composant diacide non-acide téréphtalique sont présents dans le copolymère PET en une quantité de 0,25 à 0,6 pour cent en moles.

**6.** Récipient selon la revendication 1 **caractérisé en ce que** les motifs de répétition du composant diacide non-acide téréphtalique sont présents dans le copolymère PET en une quantité de 0,25 à 0,5 pour cent en moles.

**7.** Récipient selon la revendication 1 **caractérisé en ce que** les motifs de répétition du composant diol non-éthylène glycol sont présents dans le copolymère PET en une quantité de 0,5 à 1,6 pour cent en moles.

**8.** Récipient selon la revendication 1 **caractérisé en ce que** les motifs de répétition du composant diol non-éthylène glycol sont présents dans le copolymère PET en une quantité de 0,8 à 1,3 pour cent en moles.

**9.** Récipient selon la revendication 1 **caractérisé en ce que** le composant diacide non-acide téréphtalique comprend des motifs de répétition de diacides choisis dans le groupe constitué de l'acide adipique, l'acide succinique, l'acide isophtalique, l'acide phtalique, l'acide 4,4'-biphényldicarboxylique, et l'acide naphtalènedicarboxylique.

**10.** Récipient selon la revendication 1 **caractérisé en ce que** le composant diacide non-acide téréphtalique comprend des motifs de répétition d'acide 2,6-naphtalènedicarboxylique.

**11.** Récipient selon la revendication 1 **caractérisé en ce que** le composant diol non-éthylène glycol comprend des motifs de répétition d'un diol choisi dans le groupe constitué du cyclohexanediméthanol, du propanediol, du butanediol et du diéthylène glycol.

**12.** Récipient selon la revendication 1 **caractérisé en ce que** le composant diol non-éthylène glycol comprend des motifs de répétition de diéthylène glycol.

**13.** Récipient selon la revendication 1 **caractérisé en ce que** la préforme a un rapport d'étirement dans la plage de 8 à 12.

**14.** Récipient selon la revendication 1 **caractérisé en ce que** la préforme a un rapport d'étirement dans la plage de 8 à 10.

**15.** Récipient selon la revendication 1 **caractérisé en ce que** le copolymère PET est un copolymère de qualité pour réaction.

**16.** Récipient selon la revendication 1 **caractérisé en ce que** la portion formant corps intermédiaire de la préforme a une épaisseur de paroi de 1,5 à 8 mm et un diamètre interne de 10 à 30 mm, et la préforme a une finition, une extrémité fermée opposée à la finition, et une hauteur de l'extrémité fermée à la finition de 50 à 150 mm.

**17.** Récipient selon la revendication 1 **caractérisé en ce que** le récipient a un volume dans la plage de 0,25 à 3 litres.

**18.** Récipient selon la revendication 1 **caractérisé en ce que** le récipient est une bouteille, un fût, une carafe, ou un refroidisseur.

**19.** Préforme ayant une portion formant embouchure à extrémité ouverte, une portion formant corps intermédiaire, et une portion formant base fermée, et comprenant un copolymère PET comprenant un composant diol ayant des motifs de répétition d'éthylène glycol et un composant diol non-éthylène glycol et un composant diacide ayant des motifs de répétition d'acide téréphtalique et un composant diacide non-acide téréphtalique, **caractérisée en ce que** la quantité totale de composant diol non-éthylène glycol et de composant diacide non-acide téréphtalique présents dans le copolymère PET est en une quantité de 0,2 pour cent en moles à moins de 2,2 pour cent en moles, les motifs de répétition du composant diacide non-acide téréphtalique sont présents dans le copolymère PET en une quantité de 0,1 à 1,0 pour cent en moles, et les motifs de répétition du composant diol non-éthylène glycol sont présents dans le copolymère PET en une quantité de 0,1 à 2,0 pour cent en moles, sur la base de 100 pour cent en moles du composant diol et 100 pour cent en moles du composant diacide,

**20.** Préforme selon la revendication 19 **caractérisée en ce que** le composant diacide non-acide téréphtalique comprend des motifs de répétition d'acide 2,6-naphtalènedicarboxylique et le composant diol non-éthylène glycol comprend des motifs de répétition de diéthylène glycol.

**21.** Préforme selon la revendication 20 **caractérisée en ce que** l'acide 2,6-naphtalènedicarboxylique est présent de 0,2 à 0,75 pour cent en moles et le diéthylène glycol est présent en une quantité de 0,5 à 1,6 pour cent en moles.

**22.** Préforme selon la revendication 19 **caractérisée en ce que** la préforme a un rapport d'étirement de 8 à 12.

**23.** Préforme selon la revendication 19 **caractérisée en ce que** la préforme a un rapport d'étirement de 8 à 10.

**24.** Préforme selon la revendication 19 **caractérisée en ce que** le copolymère PET est un copolymère de qualité pour réaction.

**25.** Préforme pour utilisation dans la fabrication d'un récipient comprenant un copolymère PET comprenant un composant diol ayant des motifs de répétition d'éthylène glycol et un composant diol non-éthylène glycol et un composant diacide ayant des motifs de répétition d'acide téréphtalique et un composant diacide non-acide téréphtalique, **caractérisée en ce que** la quantité totale de composant diol non-éthylène glycol et de composant diacide non-acide téréphtalique présents dans le copolymère PET est en une quantité de 0,2 pour cent en moles à moins de 3,0 pour cent en moles sur la base de 100 pour cent en moles du composant diol et 100 pour cent en moles du composant diacide, et **caractérisée en ce que** le composant diol non-éthylène glycol est présent en une quantité de 0,1 à 2,0 pour cent en moles et le composant diacide non-acide téréphtalique est présent en une quantité d'environ 0,1 à 1,0 pour cent en moles.

**26.** Préforme selon la revendication 25 **caractérisée en ce que** la quantité totale de composant diol non-éthylène glycol et de composant diacide non-acide téréphtalique présents dans le copolymère PET est en une quantité de 0,2 pour cent en moles à moins de 2,6 pour cent en moles.

**27.** Préforme selon la revendication 25 **caractérisée en ce que** le composant diol non-éthylène glycol est dérivé à partir de diéthylène glycol.

**28.** Préforme selon la revendication 25 **caractérisée en ce que** le composant diacide non-acide téréphtalique est dérivé à partir d'acide 2,6-naphtalènedicarboxylique ou son diester.

**29.** Préforme selon la revendication 25 **caractérisée en ce que** la préforme a un rapport d'étirement dans la plage de 8 à 12.

**30.** Préforme selon la revendication 25 **caractérisée en ce que** la préforme a un rapport d'étirement dans la plage de 8 à 10.

**31.** Boisson emballée comprenant un récipient constitué d'une préforme moulée par injection et une boisson disposée dans le récipient, **caractérisée en ce que** la préforme :

(a) a une portion formant embouchure à extrémité ouverte, une portion formant corps intermédiaire, et une portion formant base fermée, et
(b) comprend un copolymère PET comprenant un composant diol ayant des motifs de répétition d'éthylène glycol et un composant diol non-éthylène glycol et un composant diacide ayant des motifs de répétition d'acide téréphtalique et un composant diacide non-acide téréphtalique, **caractérisée en ce que** la quantité totale de composant diol non-éthylène glycol et de composant diacide non-acide téréphtalique présents dans le copolymère PET est en une quantité de 0,2 pour cent en moles à moins de 2,2 pour cent en moles, les motifs de répétition du composant diacide non-acide téréphtalique sont présents dans le copolymère PET en une quantité de 0,1 à 1,0 pour cent en moles, et les motifs de répétition du composant diol non-éthylène glycol sont présents dans le copolymère PET en une quantité de 0,1 à 2,0 pour cent en moles, sur la base de 100 pour cent en moles du composant diol et 100 pour cent en moles du composant diacide.

**32.** Boisson emballée selon la revendication 31 **caractérisée en ce que** les motifs de répétition du composant diacide non-acide téréphtalique sont l'acide 2,6-naphtalènedicarboxylique et **caractérisée en ce que** les motifs de répétition du composant diol non-éthylène glycol sont le diéthylène glycol.

**33.** Boisson emballée selon la revendication 31 **caractérisée en ce que** la préforme a un rapport d'étirement de 8 à 12.

**34.** Boisson emballée selon la revendication 31 **caractérisée en ce que** la préforme a un rapport d'étirement de 8 à 10.

**35.** Procédé pour réduire la durée de cycle pour fabriquer un récipient comprenant les étapes consistant à :

(1) produire une matière fondue de copolymère PET comprenant un composant diol ayant des motifs de répétition d'éthylène glycol et un composant diol non-éthylène glycol et un composant diacide ayant des motifs de répétition d'acide téréphtalique et un composant diacide non-acide téréphtalique, **caractérisé en ce que** la quantité totale de composant diol non-éthylène glycol et de composant diacide non-acide téréphtalique est présente dans le copolymère PET est en une quantité de 0,2 pour cent en moles à moins de 2,2 pour cent en moles, les motifs de répétition du composant diacide non-acide téréphtalique sont présents dans le copolymère PET en une quantité de 0,1 à 1,0 pour cent en moles, et les motifs de répétition du composant diol non-éthylène glycol sont présents dans le copolymère PET en une quantité de 0,1 à 2,0 pour cent en moles, sur la base de 100 pour cent en moles du composant diol et 100 pour cent en moles du composant diacide,
(2) puis injecter le copolymère PET dans un moule,
(3) puis refroidir le moule et le polymère contenu,
(4) puis libérer du moule une préforme,
(5) puis rechauffer la préforme, et
(6) puis mouler par extrusion-soufflage la préforme en un récipient ;

**caractérisé en ce que** la durée de cycle pour fabriquer le récipient est réduite comparée à une durée de second cycle pour fabriquer un second récipient comprenant une résine de poly(éthylène téréphtalate) ayant une modification de comonomère supérieure à 2,2 pour cent en moles d'une combinaison d'un composant diol non-éthylène glycol et d'un composant diacide non-acide téréphtalique.

**36.** Procédé selon la revendication 35 **caractérisé en ce que** les motifs de répétition du composant diacide non-acide téréphtalique sont l'acide 2,6-naphtalènedicarboxylique et **caractérisé en ce que** les motifs de répétition du composant diol non-éthylène glycol sont le diéthylène glycol.

37. Procédé selon la revendication 35 **caractérisé en ce que** la préforme a un rapport d'étirement dans la plage de 8 à 12.

38. Procédé selon la revendication 35 **caractérisé en ce que** la préforme a un rapport d'étirement dans la plage de 8 à 10.

39. Procédé pour fabriquer un récipient comprenant le moulage par extrusion-soufflage d'une préforme moulée par injection

   (a) ayant une portion formant embouchure à extrémité ouverte, une portion formant corps intermédiaire, et une portion formant base fermée, et
   (b) comprenant un copolymère PET comprenant un composant diol ayant des motifs de répétition d'éthylène glycol et un composant diol non-éthylène glycol et un composant diacide ayant des motifs de répétition d'acide téréphtalique et un composant diacide non-acide téréphtalique, **caractérisé en ce que** la quantité totale de composant diol non-éthylène glycol et de composant diacide non-acide téréphtalique présents dans le copolymère PET est en une quantité de 0,2 pour cent en moles à moins de 2,2 pour cent en moles, les motifs de répétition du composant diacide non-acide téréphtalique sont présents dans le copolymère PET en une quantité de 0,1 à 1,0 pour cent en moles, et les motifs de répétition du composant diol non-éthylène glycol sont présents dans le copolymère PET en une quantité de 0,1 1 2,0 pour cent en moles, sur la base de 100 pour cent en moles du composant diol et 100 pour cent en moles du composant diacide.

40. Procédé selon la revendication 39 **caractérisé en ce que** les motifs de répétition du composant diacide non-acide téréphtalique sont l'acide 2,6-naphtalènedicarboxylique et **caractérisé en ce que** les motifs de répétition du composant diol non-éthylène glycol sont le diéthylène glycol.

41. Procédé selon la revendication 39 **caractérisé en ce que** la préforme a un rapport d'étirement dans la plage de 8 à 12.

42. Procédé selon la revendication 39 **caractérisé en ce que** la préforme a un rapport d'étirement dans la plage de 8 à 10.

43. Procédé pour fabriquer une préforme pour utilisation dans la fabrication de récipients comprenant le moulage par injection d'un copolymère PET comprenant un composant diol ayant des motifs de répétition d'éthylène glycol et un composant diol non-éthylène glycol et un composant diacide ayant des motifs de répétition d'acide téréphtalique et un composant diacide non-acide téréphtalique, **caractérisé en ce que** la quantité totale de composant diol non-éthylène glycol et de composant diacide non-acide téréphtalique présents dans le copolymère PET est en une quantité de 0,2 pour cent en moles à moins de 2,2 pour cent en moles, les motifs de répétition du composant diacide non-acide téréphtalique sont présents dans le copolymère PET en une quantité de 0,1 à 1,0 pour cent en moles, et les motifs de répétition du composant diol non-éthylène glycol sont présents dans le copolymère PET en une quantité de 0,1 à 2,0 pour cent en moles, sur la base de 100 pour cent en moles du composant diol et 100 pour cent en moles du composant diacide.

44. Procédé selon la revendication 43 **caractérisé en ce que** les motifs de répétition du composant diacide non-acide téréphtalique sont l'acide 2,6-naphtalènedicarboxylique et **caractérisé en ce que** les motifs de répétition du composant diol non-éthylène glycol sont le diéthylène glycol.

45. Procédé selon la revendication 43 **caractérisé en ce que** la préforme a un rapport d'étirement dans la plage de 8 à 12.

46. Procédé selon la revendication 43 **caractérisé en ce que** la préforme a un rapport d'étirement dans la plage de 8 à 10.

*Fig. 1*

*Fig. 2*

*Fig. 3*

**EP 1 562 728 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5631054 A
- US 5162091 A
- EP 1336472 A

- EP 1433817 A
- US 5888598 A